# EUROPEAN PATENT SPECIFICATION

(11) **EP 0 608 970 B1**
(45) Date of publication and mention of the grant of the patent: **27.05.1998**
(21) Application number: 94300033.1
(22) Date of filing: 04.01.1994
(51) Int. Cl.: B60S 1/34

(54) **Windshield wiper**
Scheibenwischer
Essuie-glace

(30) Priority: 25.01.1993 JP 8609/93 U
(43) Date of publication of application: 03.08.1994
(73) Proprietor: NIPPON WIPERBLADE Co., Ltd., Kazo-Shi, Saitama-Ken (JP)
(72) Inventor: Arai, Masaru, c/o NIPPON WIPERBLADE CO., LTD., Kazo-Shi, Saitama-Ken (JP); Saita, Itsuro, c/o NIPPON WIPERBLADE CO., LTD., Kazo-Shi, Saitama-Ken (JP)
(74) Representative: Spall, Christopher John

(56) References cited:
- EP-A- 0 320 220
- DD-A- 1 563
- DE-A- 3 521 527
- DE-C- 970 682
- US-A- 3 064 297
- US-A- 4 477 940

## Description

### Field of the Invention

The present invention relates to a windshield wiper for use in a vehicle such as an automobile and, particularly to a construction for connecting an arm-head with a retainer which is pivotally supported on the arm-head and supporting a wiperblade of the windshield wiper.

### Description of Prior Art

In usual windshield wiper, a tension or compression spring is disposed between an arm-head and a retainer being pivotally supported on the arm-head and supporting an wiperblade, such that the spring force of the spring acts to urge the wiperblade on the surface of the windshield.

In such prior art windshield wiper, the most of the spring force acts on a hinge pin between the arm-head and the retainer, the bearing pressure of the hinge pin increases, which induces the abrasion of the hinge pin and the bearing, and induces the rattling phenomenon. Further, in cleaning the surface of the windshield it is usually required to set the wiperblade in a so-called rock-back condition (the wiperblade is rockingly moved upward to separate from the surface of the windshield), and it is desired that the angle of the rock-back condition is not so large and that the rock-back condition is stable and reliable.

An object of the present invention is to provide a windshield wiper for satisfying the above described requirements.

We are aware of DE-A-3 521 527 which discloses a wiper of the type including an arm-head and a retainer which is pivotally supported on the arm-head and supports a wiperblade, in which there is provided a link with one end pivotally supported on the arm-head, a spring disposed between the link and the retainer, and means for restricting the range of movement of the arm-head. In this disclosure, the range of movement of the wiper in the rock-back position is dependent upon the strength of the spring.

### Summary of the Invention

According to a first aspect of the invention, we provide a windshield wiper of the type including an arm-head and a retainer having a tip end and a base end and being pivotally supported on the arm-head and supporting a wiperblade, in which there is provided a link means comprising at least one link, the link means having a first end and a second end, the first end being pivotally supported on the retainer, a spring disposed between the link means and the retainer and having a first end connected to the retainer and a second end connected to the second end of the link means, characterised in that the arm-head comprises spaced abutment surfaces with an opening in between, the first end of the link means is located between the first end of the spring and the second end of the link means so that the first end of the spring is closer than the second end of the link means to the tip end of the retainer, and the opening is adapted to receive at least a portion of the link means such that the link means is adapted to engage with the surfaces upon pivotal movement of the retainer relative to the arm-head, thus restricting the range of movement of the link means.

The link means may be formed of a two-arms link, and a device restricting the range of the movement of the link means may be formed to include a wall abutting with an intermediate hinge portion of the link means in restricting the movement of the intermediate hinge portion of the link means around a pivotal supporting portion, and a device for restricting the movement of the other end of the link means to reciprocating one direction.

One end of the two-arms link may pivotally be supported on the retainer, with the wall being provided on the arm-head, and the spring being formed of a tension spring.

The link means may be formed of a one-arm link, with one end of the link being pivotally supported on the retainer and the other end of the link being received in an opening of the retainer and being movable in vertical directions, and a tension spring acting between the other end of the link and the retainer.

According to the invention, it is possible to reduce the force acting on a hinge pin which pivotally supports on the arm-head the retainer supporting the wiperblade, to improve the durability of the hinge portion and to prevent the rattling phenomenon. Further, it is possible to reduce the size of the hinge portion.

According to the invention, the height of the wiper device can be reduced as compared with prior art hook type wiper devices, and it is possible to reduce the angle of the rock-back condition.

### Brief Description of the Drawings

Further objects and effects of the present invention will become apparent from the following detailed description in conjunction with the drawings, in which:
Fig. 1 is a schematic view of a wiper arm of a wiper device according to a first embodiment of the present invention and at the normal operating condition;
Fig. 2 is a schematic view of the wiper arm of Fig. 1 and at the rock-back condition;
Fig. 3 is a detailed view of the wiper arm of Fig. 2;
Fig. 4 is a detailed view of the wiper arm of Fig. 1 and at a neutral condition;
Fig. 5 is a detailed view of the wiper arm of Fig. 1 and at another neutral condition;
Fig. 6 is a detailed explanatory view of Fig. 1;
Fig. 7 is a detailed explanatory view of the wiper arm of Fig. 1 and at a free load condition;
Fig. 8 is a schematic view of a wiper arm according to a second embodiment of the invention and at the rock-back condition;
Fig. 9 is a schematic view of the wiper arm of Fig. 8 and at the neutral condition;
Fig. 10 is a schematic view of the wiper arm of Fig. 8 and at another neutral condition, and
Fig. 11 is a schematic view of the wiper arm of Fig. 8 and at the normal load condition.

### Detailed Description of Preferred Embodiments

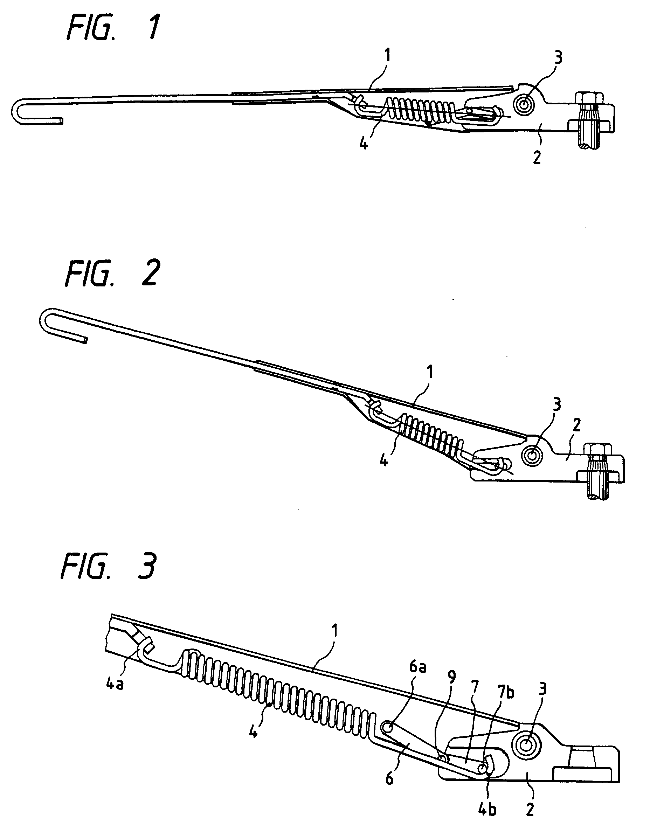

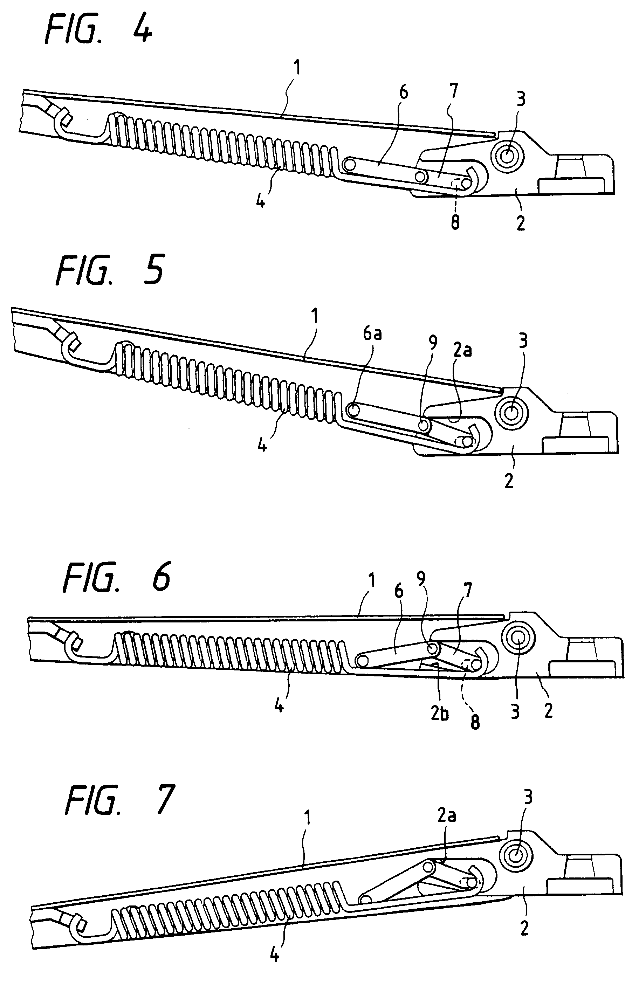

Fig. 1 through Fig. 7 show a first embodiment of the present invention, in which Fig. 1 shows the normal loading condition, Fig. 2 a rock-back condition, Fig. 3 a detailed view of the rock-back condition of Fig. 2, Fig. 4 and Fig. 5 a second and a first dead-point or neutral conditions respectively, Fig. 6 a detailed view of the normal loading condition of Fig. 1, and Fig. 7 a detailed view of a free condition. In respective drawings, shown at numeral 1 is a retainer, at 2 is an arm-head, at 3 a hinge pin pivotally connecting the retainer 1 with the arm-head 2, and at 4 is a tension spring.

The tension spring 4 includes one end 4a connected to the retainer 1 and the other end 4b connected to one end 7b of a two-arms link (6 and 7). The other end 6a of the link is pivotally supported on the retainer 1, and the end 7b of the link is slidingly supported in grooves or elongated openings 8 formed in the retainer 1. The arms 6 and 7 of the link are pivotally connected at an intermediate hinge portion 9. The axial lines of these pivotally connecting portions 6a, 9 and 7b are respectively parallel, and are parallel to the axis of the hinge pin 3. The movement of the intermediate hinge portion 9 is restricted by upper and lower walls 2a and 2b (Figs. 6 and 7) of an opening formed in the arm-head 2, whereby the movement of the end portion 7b of the link (6 and 7) in the opening 8 is restricted.

Fig. 3 shows a rock-back condition, at which the intermediate hinge portion 9 of the link abuts with the lower wall 2b of the arm-head 2, thereby the link (6 and 7) takes a stable condition. Figs. 4 and 5 show two dead point conditions or neutral conditions between the rock-back condition of Fig. 3 and the normal operating condition of Fig. 6. The intermediate hinge portion 9 abuts with the upper wall 2a in the condition of Fig. 5, and with the lower wall 2b in the condition of Fig. 4. Fig. 6 shows the normal operating condition, and the intermediate hinge portion 9 abuts with the upper wall 2a of the arm-head 2. Fig. 7 shows the free condition, in which the overall length of the tension spring 4 is the minimum which is defined by the link(6 and 7).

According to the invention, the force of the spring 4 acting on the hinge pin 3 can be reduced to the minimum, thus, it is possible to reduce the wear of the hinge pin 3 and to reduce the rattling phenomenon or the excess play of the hinge pin 3.

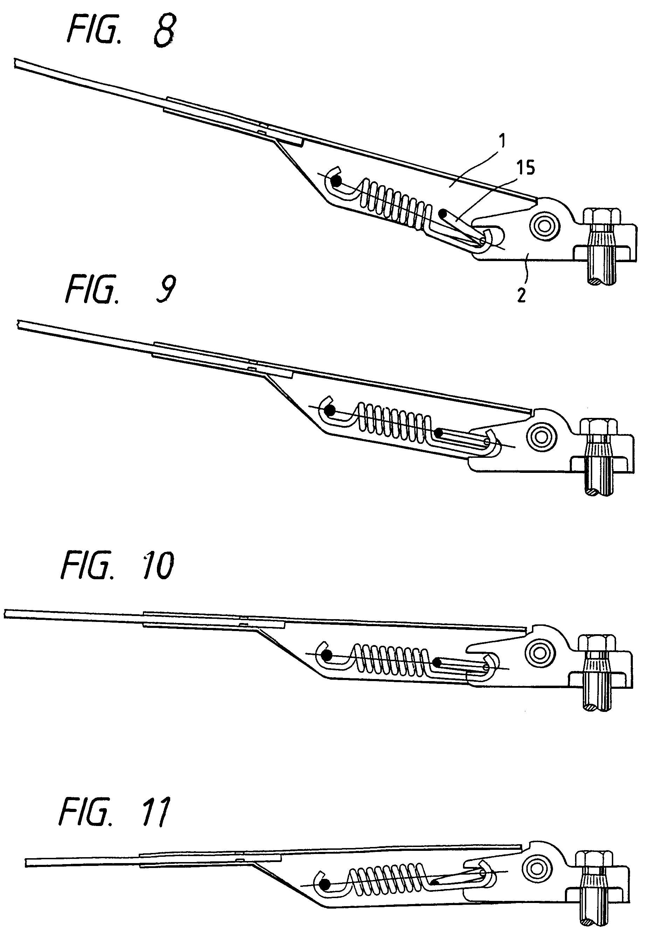

Fig. 8 through Fig. 11 show a second embodiment of the present invention, in which, a one-arm link 15 is provided. One end of the link 15 is pivotally supported on the retainer 1, and the other end of the link 15 is movable upward and downward in an opening in the arm-head 2. Fig. 8 shows a rock-back condition, Figs 9 and 10 show respectively neutral conditions, and Fig. 11 shows the normal operating condition. The operation of the embodiment is generally similar to preceding embodiments and, thus, further detailed description is omitted.

According to the invention, it is possible to reduce the force acting on the hinge pin connecting pivotally the retainer with the arm-head, thus, it is possible to improve the durability of the hinge portion, to prevent excess wear of the hinge portion, and to reduce the size of the hinge portion. Further, it is possible to reduce the height of the wiper arm, and to attain the rock-back condition of a small angle.

The invention is not limited to the embodiments, and various changes and modifications can easily be made by those skilled in the art.
For example, the groove 8 slidingly receive the end portion 7b may define a straight passage or a curved passage.

## Claims

1. A windshield wiper of the type including an arm-head 2 and a retainer 1 having a tip end and a base end and being pivotally supported on the arm-head and supporting a wiperblade, in which there is provided a link means comprising at least one link, the link means having a first end and a second end, the first end being pivotally supported on the retainer, a spring 4 disposed between the link means and the retainer and having a first end 4a connected to the retainer 1 and a second end 4b connected to the second end of the link means,
characterised in that the arm-head comprises spaced abutment surfaces 2a,2b with an opening 8 in between, the first end of the link means is located between the first end of the spring and the second end of the link means so that the first end of the spring 4 is closer than the second end of the link means to the tip end of the retainer, and the opening 8 is adapted to receive at least a portion of the link means such that the link means is adapted to engage with the surfaces 2a,2b upon pivotal movement of the retainer 1 relative to the arm-head 2, thus restricting the range of movement of the link means (7,8;12,13).

2. A windshield wiper according to claim 1, in which the link means is a two-arms link 12,13, and means for restricting the range of the movement of the link means includes a wall for abutting with an intermediate hinge portion 14 of the link means and restricting the movement of the link means around the pivotal supporting portion thereof, and means for restricting the movement of the other end of the link means into one passage.

3. A windshield wiper according to claim 2, in which one end 12a of the two-arms link 12,13 is pivotally connected to the retainer 1, said wall is provided on the arm-head 2, and the spring is a tension spring 4.

4. A windshield wiper according to claim 2, in which said passage 8 extends along a straight line.

5. A windshield wiper according to claim 2, in which said passage 8 extends along a curved line.

6. A windshield wiper according to claim 1, in which said link means is a one-arm link 15, with one end of the link 15 being pivotally supported on the retainer 1, and a tension spring 4 is provided to act between the other end of the retainer 1 and the other end of the link 15.

## Patentansprüche

1. Scheibenwischer vom Typ umfassend einen Armkopf 2 und einen Halter 1 mit einem Spitzenende und einem Basisende, und der auf dem Armkopf schwenkbar getragen ist und ein Wischerblatt trägt, in dem ein Verbindungsmittel vorgesehen ist umfassend mindestens ein Verbindungsstück, wobei das Verbindungsmittel ein erstes Ende aufweist und ein zweites Ende, wobei das erste Ende schwenkbar auf dem Halter getragen ist, eine Feder 4 zwischen dem Verbindungsmittel und dem Halter angeordnet ist und ein erstes Ende 4a aufweist, das mit dem Halter 1 verbunden ist und ein zweites Ende 4b, das mit dem zweiten Ende des Verbindungsmittels verbunden ist, dadurch gekennzeichnet, daß der Armkopf in einem Abstand angeordnete Anschlagflächen 2a, 2b mit einer Öffnung 8 dazwischen umfaßt, das erste Ende des Verbindungsmittels zwischen dem ersten Ende der Feder und dem zweiten Ende des Verbindungsmittels angeordnet ist, so daß das erste Ende der Feder 4 näher als das zweite Ende des Verbindungsmittels zum Spitzenende des Halters ist, und die Öffnung 8 geeignet ist, mindestens einen Teil des Verbindungsmittels aufzunehmen, so daß das Verbindungsmittel in der Lage ist, nach Drehbewegung des Halters 1 relativ zum Armkopf 2, mit den Flächen 2a,2b zusammenzuwirken, um auf diese Weise den Bewegungsbereich der Verbindungsmittel (7,8; 12,13) zu beschränken.

2. Scheibenwischer nach Anspruch 1, in dem das Verbindungsmittel ein zweiarmiges Verbindungsstück 12, 13 ist und Mittel zum Beschränken des Bereichs der Bewegung des Verbindungsmittels eine Wand zum Anschlag mit einem Zwischengelenkteil 14 des Verbindungsmittels umfaßt und die Bewegung des Verbindungsmittels um seinen Schwenkträgerteil beschränkt, und Mittel zum Beschränken der Bewegung des anderen Endes des Verbindungsmittel in einem Durchgang.

3. Scheibenwischer nach Anspruch 2, in dem ein Ende 12a des zweiarmigen Verbindungsstücks 12, 13 schwenkbar mit dem Halter 1 verbunden ist, wobei die Wand auf dem Armkopf 2 vorgesehen ist und die Feder eine Zugfeder 4 ist.

4. Scheibenwischer nach Anspruch 2, in dem der Durchgang 8 sich entlang einer geraden Linie erstreckt.

5. Scheibenwischer nach Anspruch 2, in dem der Durchgang 8 sich entlang einer gekrümmten Linie erstreckt.

6. Scheibenwischer nach Anspruch 1, in dem das Verbindungsmittel ein einarmiges Verbindungsstück 15 ist, wobei ein Ende des Verbindungsstücks 15 schwenkbar auf dem Halter 1 getragen ist und eine Zugfeder 4 vorgesehen ist, um zwischen dem anderen Ende des Halters 1 und dem anderen Ende des Verbindungsstücks 15 zu wirken.

## Revendications

1. Essuie-glace du type comprenant une tête de bras 2 et un fourreau 1 ayant une extrémité de pointe et une extrémité de base et oui est supporté de manière pivotante sur la tête de bras et oui supporte une lame d'essuie-glace, dans lequel on prévoit un moyen de liaison articulé comprenant au moins un élément d'articulation, le moyen de liaison ayant une première extrémité et une deuxième extrémité, la première extrémité étant supportée de manière pivotante sur le fourreau, un ressort 4 étant disposé entre le moyen de liaison et le fourreau et ayant une première extrémité 4a reliée au fourreau 1 et une deuxième extrémité 4b reliée à la deuxième extrémité du moyen de liaison,
caractérisé en ce que la tête de bras comprend des surfaces de butée espacées 2a, 2b séparées par une ouverture 8, la première extrémité du moyen de liaison est placée entre la première extrémité du ressort et la deuxième extrémité du moyen de liaison de façon que la première extrémité du ressort 4 soit plus proche de l'extrémité de pointe du fourreau que la deuxième extrémité du moyen d'articulation, et l'ouverture 8 est prévue pour recevoir au moins une partie du moyen de liaison de façon que le moyen de liaison soit prévu pour coopérer avec les surfaces de butée 2a, 2b lors d'un pivotement du fourreau 1 par rapport à la tête de bras 2, ce qui limite l'amplitude du déplacement du moyen de liaison articulée (7, 8 ; 12, 13).

2. Essuie-glace selon la revendication 1, dans lequel le moyen de liaison est une liaison articulée à deux bras 12, 13, et un moyen permettant de restreindre l'amplitude du déplacement du moyen de liaison comprend une paroi destinée à venir en butée sur une partie de liaison intermédiaire 14 du moyen de liaison articulée et à restreindre le déplacement du moyen de liaison autour de la partie de support en pivotement de celle-ci, et un moyen permettant de restreindre le déplacement de l'autre extrémité du moyen de liaison dans un seul passage.

3. Essuie-glace selon la revendication 2, dans lequel une extrémité 12a de la liaison articulée à deux bras 12, 13 est reliée de manière pivotante au fourreau 1, ladite paroi étant disposée sur la tête de bras 2, et le ressort étant un ressort de traction 4.

4. Essuie-glace selon la revendication 2, dans lequel ledit passage 8 s'étend le long d'une ligne droite.

5. Essuie-glace selon la revendication 2, dans lequel ledit passage 8 s'étend le long d'une ligne courbe.

6. Essuie-glace selon la revendication 1, dans lequel ledit moyen de liaison est une liaison articulée à un seul bras 15, une extrémité de l'articulation 15 étant supportée de manière pivotante sur le fourreau 1, et un ressort de traction 4 étant prévu pour agir entre l'autre extrémité du fourreau 1 et l'autre extrémité de la liaison articulée 15.
